# EUROPEAN PATENT APPLICATION

(11) **EP 1 925 493 A2**
(43) Date of publication of application: **28.05.2008**
(21) Application number: 07254556.9
(22) Date of filing: 22.11.2007
(51) Int. Cl.: B60L 11/12, B60L 11/18

(54) **Energy management for hybrid energy railway vehicle**

(30) Priority: 24.11.2006 JP 2006317369
(71) Applicant: Hitachi, Ltd., Chiyoda-ku Tokyo 100-8280 (JP)
(72) Inventor: Terunuma, Mutsuhiro, Hitachi Ltd. Intell. Prop. Group, Tokyo 100-8220 (JP); Shimada, Motomi, Hitachi Ltd. Intell. Prop. Group, Tokyo 100-8220 (JP); Toyota, Eiichi, Hitachi Ltd. Intell. Prop. Group, Tokyo 100-8220 (JP); Kaneko, Takashi, Hitachi Ltd. Intell. Prop. Group, Tokyo 100-8220 (JP)
(74) Representative: Paget, Hugh Charles Edward

(57) **Abstract**

In a hybrid energy railway vehicle, a driving control device for railway vehicle is provided in which electrical storage means with characteristics suitable for each of a vehicle driving control device and a vehicle auxiliary power supply device are prepared, respectively, so that through exchange of power between these electrical storage means, optimal power management and vehicle performance improvement can be realized. First electrical storage means is provided at power converting means that supplies power to a motor for driving a vehicle, second electrical storage means is provided at power means that supplies power to an auxiliary power supply device for vehicle, and the first electrical storage means and the second electrical storage means are connected to each other by power level converting means so that power is exchanged between the first electrical storage means and the second electrical storage means through the power level converting means according to an operating state of the vehicle.

## Description

### BACKGROUND OF THE INVENTION

### Field of the Invention

The present invention relates to a drive control device for railway vehicle and particularly to a control device provided with power generating means and electrical storage means and driving a railway vehicle using electric power generated by the both means.

### Description of the Related Art

There are many non-electrified lines in local railway lines with a few services, where passenger transportation by railway motor cars powered by diesel engine is utilized in general. Recently, application of a so-called hybrid railway vehicle to the non-electrified lines is being examined, using also electrical storage means in power generation equipment driven by an engine for which effects of reduction in maintenance works and moreover of exhaust gas reduction can be expected.

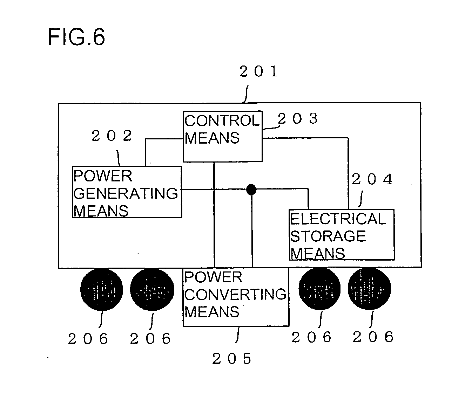

FIG. 6 is a diagram illustrating configuration of a conventional example of a hybrid railway vehicle. A railway vehicle 201 comprises power generating means 202 driven by an engine and generating AC power, power converting means 205 for converting the AC power to DC power and moreover to the AC power again for driving a wheel 206 directly connected to a motor, and electrical storage means 204 having functions for charging and discharging the DC power of the power converting means 205. Optimal power management is carried out for the power generating means 202, the power converting means 205, and the electrical storage means 204 by control means 203. For example, Japanese Patent Laid-Open Publication No. 2005-27447 (Patent Document 1) discloses such a hybrid railway vehicle.

On a railway vehicle, an auxiliary power supply device for supplying power to an air conditioner, an in-vehicle fluorescent lamp, an air compressor and the like (hereinafter referred to as SIV (Static Inverter)) is mounted.

The SIC is also a system configured to convert the DC power to the AC power similarly to the power converting means 205 shown in FIG. 6 and is a device that outputs an AC current of 60 Hz at 440 V or 200 V and keeps on supplying a constant power continuously from when the railway vehicle leaves a rail yard till when it finishes service and enters the yard again.

On the other hand, the power converter 205 has a difference in that a large power at acceleration of the vehicle is supplied for driving vehicle, while a large power is regenerated at deceleration, and since the power converting means 205 does not operate during the vehicle is waiting, the power generating means 202 might be stopped.

Power should be continuously supplied to the SIC even in this case, and if even the SIC is to be driven by the electrical storage means 204, there can be nonconformity that optimal power management can not be realized at restart of the vehicle or the like.

The present invention was made in view of the above circumstances and has an object to provide a drive control device for railway vehicle for optically managing power of electrical storage means not only in driving but also during waiting.

### SUMMARY OF THE INVENTION

The above object can be achieved by providing first electrical storage means at power converting means that supplies power to a motor for driving a vehicle and by providing second electrical storage means at power means that supplies power to an auxiliary power supply device for vehicle, in which the first electrical storage means and the second electrical storage means are connected to each other by power level converting means so that power is exchanged between the first electrical storage means and the second electrical storage means via the power level converting means according to a driving state of the vehicle.

According to the present invention, electrical storage means suitable for each of the driving control device for vehicle and the auxiliary power supply device for vehicle can be prepared, respectively, and optimal power management is realized. Also, through exchange of power, it is advantageous that power supply assistance can be made from one electrical storage means to the other electrical storage means, and vehicle performance can be also improved.

### BRIEF DESCRIPTION OF THE DRAWINGS

FIG. 1 is an explanatory diagram of a driving control device for a railway vehicle in an embodiment of the present invention;
FIG. 2 is an explanatory diagram of each storage battery of the embodiment of the present invention;
FIG. 3 is an action explanatory diagram of a step-up chopper at acceleration driving of a vehicle in the embodiment of the present invention;
FIG. 4 is an action explanatory diagram of a step-down chopper at deceleration driving of a vehicle in the embodiment of the present invention;
FIG. 5 is an action explanatory diagram of the step-down chopper at waiting of the vehicle in the first embodiment of the present invention; and
FIG. 6 is an explanatory diagram of configuration of a hybrid energy railway vehicle in a conventional example.

### DETAILED DESCRIPTION OF THE PREFERRED EMBODIMENTS

An embodiment of the present invention will be described below referring to the attached drawings.

### [Example 1]

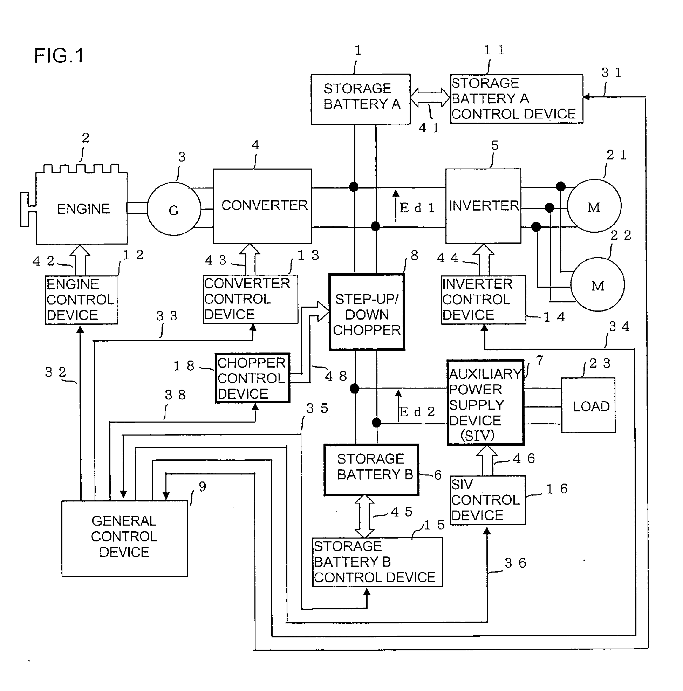

FIG. 1 is an explanatory diagram of a driving control device for railway vehicle in a first embodiment of the present invention. In FIG. 1, a power generator 3 is directly connected to an engine 2, and by driving the engine 2, the power generator 3 generates AC power. The AC power is fed to a converter 4 and converted to DC power. To an output Ed1 of the converter 4, a storage battery A1 and an inverter 5 are connected so as to convert the DC power Ed1 to the AC power again, and the AC power drives motors 21 and 22. To an output Ed1 of the converter 4, one of a step-up/down chopper 8 is connected, while to the other of the step-up/down chopper 8, a storage battery B6 and an auxiliary power supply device 7 for vehicle are connected so as to convert the DC power Ed2 to the AC power and to supply the AC power to a load 23.

The output power of the engine 2 is controlled by an output 42 of an engine control device 12, the converter 4 by an output 43 of a converter control device 13, a storage battery A1 by an output 41 of a storage battery A control device 11, and the inverter 5 by an output 44 of an inverter control device 14, respectively, with regard to driving control of the vehicle.

The storage battery B6 is controlled by an output 45 of a storage battery B control device 15, the auxiliary power supply device 7 for vehicle by an output 46 of an SIV control device 16, with regard to control to supply power with constant voltage to the load such as a fluorescent lamp and an air conditioner in a vehicle.

The above engine control device 12, the converter control device 13, the storage battery A control device 11, the inverter control device 14, the storage battery B control device 15, and the SIV control device 16 are given appropriate power management of Ed1, Ed2 by a general control device 9.

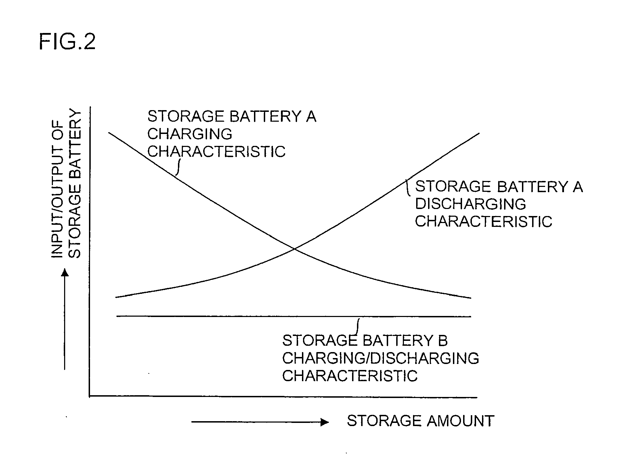

FIG. 2 explains characteristics of each storage battery in an embodiment of the present invention.

As charging/discharging characteristics of storage batteries in a hybrid energy railway vehicle in FIG. 1, the storage battery A supplies a large power to the inverter 5 at acceleration of the vehicle, while a regenerative electric power is supplied from the inverter 5 at deceleration. Thus, as shown in FIG. 2, input/output of a storage battery with respect to a storage amount needs a symmetric characteristic. In other words, a type of storage battery with a high output in a short time is required.

On the other hand, the storage battery B needs substantially constant input/output characteristics as shown in FIG. 2 since the vehicle auxiliary power supply device (SIV) 7 continuously supplies a constant voltage to the load 23.

If the storage battery A is used for the storage battery B, when the engine is stopped during the vehicle is waiting in respect of noise/energy saving, discharging is expedited, which causes trouble in power supply to the vehicle auxiliary power supply device (SIV) 7. On the other hand, if the storage battery B is used for the storage battery A, a large power required for driving of the vehicle can not be supplied, which hinders operation of the vehicle. Therefore, it is important to choose a storage battery with a characteristic according to use of the power converting means of a railway vehicle.

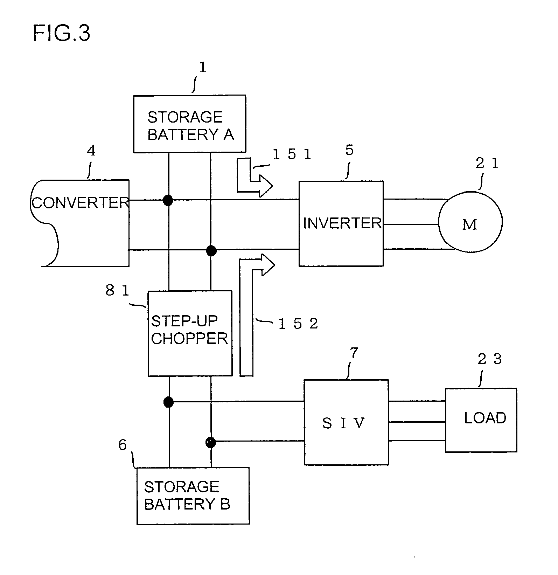

FIG. 3 explains an action of a step-up/down chopper at acceleration driving in the embodiment of the present invention. The step-up/down chopper 8 is an important component in the hybrid railway vehicle using storage batteries with different characteristics as above. In acceleration of the vehicle, it is operated as a step-up chopper as shown in FIG. 3, power 152 from the storage battery B6 is supplied to the inverter 5 via a step-up chopper 81 so that power 151 from the storage battery A1 can be assisted.

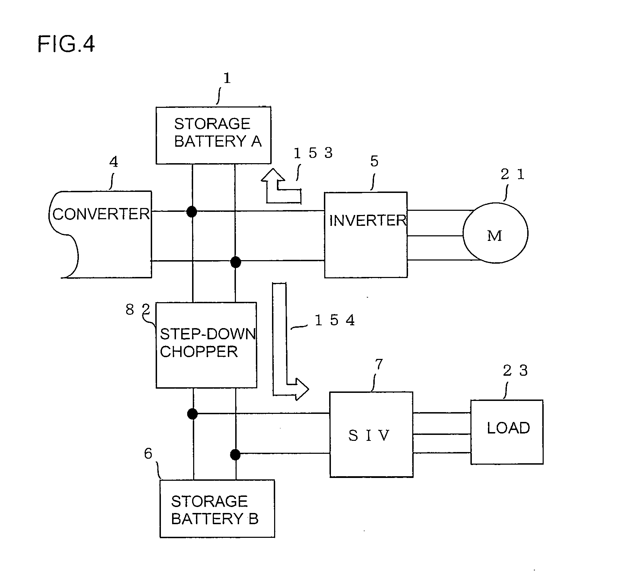

FIG. 4 is an action explanatory diagram of a step-down chopper at deceleration driving of a vehicle in the embodiment of the present invention. In power regeneration at deceleration of the vehicle, as shown in FIG. 4, in addition to power 153 for charging the storage battery A1, the step-down chopper 82 is operated according to the size of the DC voltage of the inverter 5 so as to operate as the step-down chopper 82 so that power 154 to the vehicle auxiliary power supply device (SIV) 7 can be assisted.

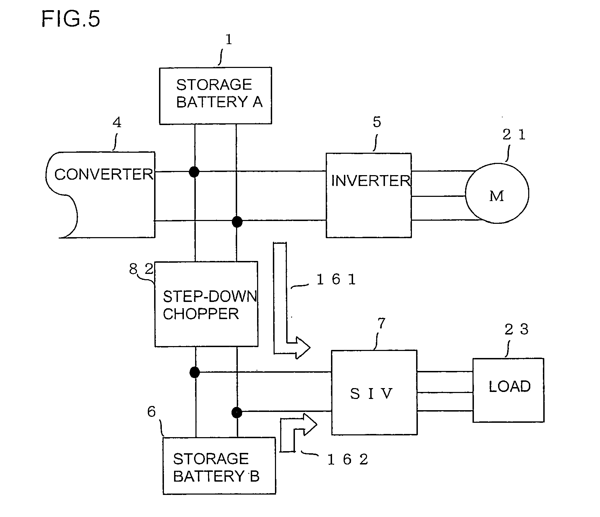

FIG. 5 is an action explanatory diagram of the step-down chopper during the vehicle is waiting in the first embodiment of the present invention.

In FIG. 5, even if the vehicle stops the engine during waiting, the step-down chopper 82 is operated so as to supply power 161 of the storage battery A1 to the vehicle auxiliary power supply device (SIV) 7 through the step-down chopper 82 so that and power 162 from the storage battery B6 can be assisted.

The chopper control device 18 controlling the step-up/down chopper 8 is connected to the general control device 9 as shown in FIG. 1, and the driving state of each of the engine 2, the converter 4, the inverter 5, and the vehicle auxiliary power supply device 7 and the charging/discharging state of the storage battery A1 and the storage battery B6 can be known, which enables optimal power assistance.

With the embodiment as mentioned above, the optimal power management is realized, and vehicle performance can be improved.

## Claims

1. A drive control device for railway vehicle in a railway vehicle driving system on which power generating means by an engine, DC power generating means having converter means that converts AC power generated by the power generating means to first DC power, first AC power generating means having inverter means that inverts the first DC power to first AC power, first electrical storage means having functions of charging and discharging the first DC power, control means that controls the power generating means, the DC power generating means, the first AC power generating means, and the first DC electrical storage means, and a driving motor driven by the first AC power are mounted, **characterized by** comprising:
second electrical storage means having a function of charging and discharging second DC power with a level different from the first DC power, second AC power generating means having inverter means that inverts the second DC power to second AC power, power level converting means between the first DC power and second DC power, and a control means that controls the power level converting means.

2. The drive control device for railway vehicle according to claim 1, **characterized in that**
the power level converting means between the first DC power and second DC power supplies the second DC power to the first AC power generating means or supplies the first DC power to the second AC power generating means according to the state of the first DC power and the second DC power.

3. The drive control device for railway vehicle according to claim 2, **characterized in that**
the first DC power is supplied to the second DC power through the power level converting means during waiting of the railway vehicle.

4. The drive control device for railway vehicle according to claim 2, **characterized in that** the second DC power is supplied to the first DC power through the power level converting means during driving of the railway vehicle.
